# EUROPÄISCHE PATENTSCHRIFT

(11) **EP 1 574 459 B1**
(45) Veröffentlichungstag und Bekanntmachung des Hinweises auf die Patenterteilung: **18.06.2008**
(21) Anmeldenummer: 05004124.3
(22) Anmeldetag: 25.02.2005
(51) Int. Cl.: B65G 47/08

(54) **Vorrichtung und Verfahren zum lagegerechten Übergeben von quaderförmigen Waren**
Device and method for the transfer of parallelepipedal products in a certain position
Dispositif et procédé pour le transfert de produits parallélépipèdiques dans une certaine position

(30) Priorität: 11.03.2004 DE 102004012043
(43) Veröffentlichungstag der Anmeldung: 14.09.2005
(73) Patentinhaber: Dematic GmbH, 63073 Offenbach am Main (DE)
(72) Erfinder: Fleischer, Joachim, 50174 Kamen (DE); Kalmhöfer, Udo, 90765 Fürth (DE)
(74) Vertreter: Moser & Götze

(56) Entgegenhaltungen:
- EP-A- 0 582 962
- EP-A- 1 426 315
- US-A- 4 522 292
- US-A- 5 145 049

## Beschreibung

Die Erfindung betrifft ein Verfahren zum lagegerechten übergeben von quaderförmigen Waren eines Warenstromes, wie Kartons, Pakete oder dergleichen, von einer ersten Förderbahn auf eine im Übergabebereich benachbarte zweite Förderbahn sowie zum geordneten Ablegen der Waren auf einem auf der zweiten Förderbahn transportierbaren Ladungsträger, wobei im Übergabebereich der ersten Förderbahn nach vorheriger Erfassung mindestens der Geometrie jeder Ware eine auf dem Ladungsträger lagerfähige Einheit aus einer oder mehreren parallel zur Transportrichtung ausgerichteten, gegebenenfalls um 90° gegenüber der Transportrichtung gedrehten Waren gebildet wird, die mit einem Übergabehub quer zur Transportrichtung der Förderbahn auf den Ladungsträger überführt wird, und eine Vorrichtung gemäß dem Oberbegriff des Anspruchs 1.

Eine Vorrichtung der gattungsgemäßen Art ist beispielsweise aus der US 5,145,049 bekannt.

Um bei fortschreitender Automatisierung der Lagertechnik auch das Zusammenstellen der Waren zu lagerfähigen Einheiten automatisch abzuwickeln, werden bei dem aus EP 0 582 962 B1 bekannten System die einzulagernden Gegenstände, beispielsweise Pakete, im Wareneingang zunächst einzeln auf eine Förderbahn übergeben, wo sie zu lagerfähigen Einheiten zusammengestellt und auf dafür vorgesehene Ladungsträger übergeben werden. Die Ladungsträger werden auf einer zumindest im Übergabebereich zur ersten Förderbahn parallelen zweiten Förderbahn herantransportiert und nach der Beladung mit den Waren abtransportiert. Vor der Übergabe der Waren auf den Ladungsträger müssen die Waren auf der ersten Förderbahn ausgerichtet und vermessen werden, um sicherzustellen, dass Länge und Breite des Ladungsträgers beim Beladen mit den Waren nicht überschritten wird. Beim Stand der Technik erfolgt deshalb die Ausrichtung der auf die erste Förderbahn verbrachten Waren durch Einleiten einer Kraftkomponente auf die Ware in Richtung einer seitlich an der Förderbahn angebrachten Begrenzung, an die sich eine Quer- oder Längsseite des Fördergutes anlegt. Vorzugsweise wird die dazu erforderliche Kraft durch eine Förderbahn mit schräg angeordneten Rollen erzielt.

Hinsichtlich der Geometrie der Waren sieht der Stand der Technik vor, die Daten in einem Strichcode zu speichern, welcher Informationen über die Größe und das Gewicht der Ware enthält und abgerufen werden kann, um festzustellen, ob die Ware zur Zusammenstellung einer lagerfähigen Einheit geeignet ist und ob sie die richtige Lage in Bezug auf die Transportrichtung auf der Förderbahn eingenommen hat. Sollte letzteres nicht zutreffen, sollte beispielsweise eine Ware mit ihrer Längsseite quer auf der Förderbahn liegen, so wird durch einen steuerbaren Queranschlag dem Paket eine Drehung um 90° aufgezwungen. Zusätzlich können Sensoren vorgesehen sein, mit denen feststellbar ist, wann die Länge des Be- und Entladebereichs bzw. des Ladungsträgers überschritten wird.

Zum Verbringen der Ware auf die Ladungsträger, die beim Stand der Technik als Tablare ausgebildet sind, sind die Tablare bodenseitig mit Durchgriffsöffnungen für den Übergaberechen einer quer zur Transportrichtung arbeitenden Übergabevorrichtung versehen, mit der eine auf der ersten Förderbahn im Übergabebereich zusammengestellte ladefähige Einheit von dieser ersten Förderbahn auf das Tablar der zweiten Förderbahn übergeben werden kann.

Bei der bekannten Vorrichtung hat es sich als nachteilig herausgestellt, dass die auf der ersten Förderbahn ausgerichteten und durch Transportieren gegen einen Stopper verdichteten (d.h. dicht aufeinandergeschobenen) Waren zwar in einer Reihe hintereinanderliegend ausgerichtet auf den Ladungsträger übergeben werden, jedoch lediglich darauf geachtet wird, dass keine Ware über das Tablar überhängt, mit dem Ergebnis, dass häufig der zur Verfügung stehende Platz auf dem Ladungsträger nicht ausgenutzt wird. Dies ist insbesondere dann der Fall, wenn Waren, beispielsweise Pakete, auf den Ladungsträger übergeben werden, deren Abmessungen wesentlich geringer sind, als die Breite des Ladungsträgers. In diesem Fall werden zwar, auf die Länge des Ladungsträgers bezogen, ausreichend viele Waren übergeben, bezogen auf die Breite aber verbleibt viel Raum ungenutzt.

Die US 4,522,292 offenbart eine Vorrichtung zum Orientieren von Produkten mit einem Förderer zum Fördern von Produkten auf einer sich allgemein in der Längsrichtung erstreckenden Förderbahn, einer Gruppiereinrichtung zum Gruppieren von einzelnen Produktgegenständen in Sätzen von je einem oder mehreren Gegenständen und einer Produktorientiereinrichtung, die in der genannten Bahn der Gruppiereinrichtung nachgeschaltet ist und eine Drehscheibe umfasst, die zum Orientieren der Produkte gegenüber der Förderbahn dient. Des Weiteren umfasst die Vorrichtung eine kontinuierlich bewegbare Übergabeeinrichtung zur Aufnahme der Produkte von dem die Produkte tragenden und der Drehscheibe zuführenden Förderer und zur Abgabe der umorientierten Produkte längs der Förderbahn. Die Übergabeeinrichtung transportiert die von ihr getragenen Produkte an eine Stelle über der Drehscheibe und setzt die Produkte auf Drehscheibe ab.

Es ist deshalb das Ziel und die Aufgabe der vorliegenden Erfindung eine Vorrichtung und ein Verfahren zum lagerechten Übergeben von quaderförmigen Waren eines Warenstromes zu schaffen, mit der im automatisierten Betrieb eine möglichst große Anzahl von Waren auf ein Tablar überführt werden kann, so dass der Lagerraum eines die Ladungsträger aufnehmenden Lagersystems optimal ausgenutzt werden kann. Zu diesem Zweck sollen die Waren in einer sinnvoll verdichteten Anordnung auf dem Ladungsträger so abgelegt werden, dass möglichst wenig belegbarer Raum auf dem Ladungsträger ungenutzt bleibt,

Diese Aufgabe wird durch eine Vorrichtung gemäß Anspruch 1 und ein Verfahren gemäß Anspruch 14 gelöst.

Im Rechner, sind beispielsweise anhand vorbekannter Warenabmessungen, alle möglichen Belegraster gespeichert, die jeweils den zur Verfügung stehenden Lagerplatz auf dem Ladungsträger optimal abdecken. Dementsprechend berechnet oder wählt der Rechner aus den erfassten Geometriedaten der vorsortiert auf der ersten Förderbahn abgelegten Waren das für die jeweiligen Warenabmessungen optimale Belegraster aus und stellt, entsprechend diesem Belegraster, die lagerfähige Einheit optimal zusammen. Dabei erfolgt eine solche Verdichtung der Waren, dass möglichst kein Bereich der Ablagefläche des Ladungsträgers unbelegt bleibt. Die lagerfähige Einheit weist dabei ein Transportrichtung eine Länge auf, die möglichst der Länge des Ladungsträgers entspricht.

Nach einem ausgestaltenden Merkmal der Erfindung wird die quaderförmige Ware nach Aufgabe auf die erste Förderbahn in Transportrichtung hintereinanderliegend aufgereiht verdichtet und lageoptimiert ausgerichtet quer auf den Ladungsträger überführt. Sollte herantransportierte Ware nicht zu dem im Rechner ausgewählten Belegraster passen, so wird diese Ware aussortiert. Unmittelbar nach dem Zusammenstellung einer aufgereihten lagerfähigen Einheit, wird diese, als Reihe verdichtet und ausgerichtet, quer zur Transportrichtung auf den Ladungsträger überführt.

Das Ausrichten der Ware erfolgt wie beim Stand der Technik durch Führen der Ware gegen eine im Bereich der ersten Förderbahn vorgesehene seitliche Begrenzung und das Verdichten der Ware erfolgt in Transportrichtung gegen einen in den Förderweg bewegbaren Anschlag am Ende des Übergabebereiches, gegen den die Ware transportiert wird. Das Führen der Ware gegen die seitliche Begrenzungsvorrichtung kann, wie aus dem Stand der Technik bekannt, dadurch geschehen, dass die erste Förderbahn mindestens bereichsweise als Schrägrollenförderer ausgebildet ist.

Für die Ausführung der Erfindung ist es von besonderer Bedeutung, dass vor dem Übergabebereich der ersten Förderbahn eine automatisierte Umorientierung der Ausrichtung der Ware erfolgen kann, wenn bedarfsweise ein Drehen der Ware in ihrer horizontalen Auflageebene um 90° erforderlich ist. Wenn beispielsweise der Rechner feststellt, dass zur optimalen Verdichtung der lagerungsfähigen Einheit eine in Längsrichtung ihrer Abmessungen herantransportierte Ware besser in Querrichtung gelagert werden kann, so wird nach Erfassung der Ausrichtung mittels Sensoren ein Signal zum Drehen dieser Ware an die Vorrichtung zum Umorientieren gegeben, die sinnvoller Weise unmittelbar vor dem Übergabebereich der ersten Förderbahn angeordnet ist.

Nach einem besonderen Merkmal der Erfindung besteht die Vorrichtung zum Umorientieren der Ausrichtung der Waren aus einer heb- und senkbaren sowie um eine vertikale Achse dreh- oder verschwenkbaren Auflageplatte mit einer Vielzahl von Ausnehmungen, die jeweils in ihrer abgesenkten Stellung von den Rollen einer in Transportrichtung ausgerichteten Rollenbahn mindestens teilweise durchdrungen werden und die in der angehobenen Stellung über den Außenumfang der Rollen, das Verdrehen oder Verschwenken der Auflageplatte gestattend, positionierbar sind. In der Praxis weist die Auflageplatte symmetrisch angeordnete Öffnungen auf, durch die die ortsfest angeordneten Rollen in beiden Verdrehstellungen mindestens teilweise hindurchgreifen, so dass in der jeweils abgesenkten Stellung der Auflageplatte ein Transportieren der Waren über die Rollenbahn in Transportrichtung möglich ist, während in der angehobenen Stellung die Ware von den Rollen abgehoben ist und durch Verdrehen der Auflageplatte um 90° zusammen mit dieser verdrehbar ist.
Durch anschließendes Absenken in jeder um 90° verdrehten Stellung der Auflageplatte kommen die durch die Ausnehmungen hindurchgreifenden Rollen wieder in Kontakt mit der Ware und diese kann, nunmehr um 90° gedreht, in die Übergabevorrichtung transportiert werden.

Vorzugsweise erfolgt das Drehen oder Verschwenken der Auflageplatte pneumatisch; andere, etwa mechanische oder hydraulische Einrichtungen sind ebenfalls denkbar. Das Ausrichten und Verschwenken kann dabei mit hoher Sicherheit auch sehr schnell erfolgen, wobei die Ware, auf der Auflageplatte sicher aufliegend, nicht beschädigt werden kann.

Die Erfindung schlägt in vorteilhafter Weise vor, dass zur Bildung von übereinanderliegenden Lagen von Waren auf dem jeweiligen Ladungsträger in einem weiteren platzoptimierten Belegraster die Ladungsträger absenkbar oder die Übergabevorrichtung anhebbar ist. Auf diese Weise ist es nicht nur erfindungsgemäß möglich, mehrere Reihen nebeneinanderliegender, zuvor verdichteter Ladungseinheiten auf dem Ladungsträger abzulegen, sondern auch eine zweite oder gegebenenfalls weitere Lagen von Waren auf dem Ladungsträger zu bilden, die allesamt die Forderung erfüllen, hinsichtlich der Flächenbelegung optimiert platzsparend auf dem Ladungsträger abgelegt zu sein.

Vorteilhafterweise wirkt die Übergabevorrichtung mit einem horizontal bewegbaren Schieber zusammen, der die lagerfähige Einheit von Waren auf den Ladungsträger überführt und der auf seinem Rückhub in die Ausgangslage über eine im Übergabebereich auf der ersten Förderbahn in Transportrichtung hintereinanderliegende lageroptimiert verdichtete Reihe von Waren hinweghebbar und auf der der zweiten Förderbahn abgewandten Seite hinter dieser Reihe von Waren absenkbar ist. Diese Funktionsweise des Abschiebers entkoppelt den Übergabevorgang einer gebildeten Reihe verdichteter Waren von dem Vorgang der Bildung einer ebensolchen zweiten Reihe von Waren im Übergabebereich. Dadurch wird es erfindungsgemäß möglich, dass das Bilden einer zweiten lageoptimiert verdichteten Reihe von Waren auf der ersten Förderbahn und das Übergeben der ersten lageoptimiert verdichteten Reihe von Waren auf den Ladungsträger der zweiten Förderbahn etwa zeitgleich erfolgen, wodurch die Leistungsfähigkeit der Anlage deutlich erhöht wird. Vorteilhafterweise sind die Ladungsträger in bekannter Weise mit Durchgriffsschlitzen versehene Tablare, die von an der Übergabevorrichtung vorgesehenen Anheberrechen durchdrungen werden und durch Abheben der Ware von der Förderbahn ein Übernehmen der Ware ermöglichen.

Um zu erreichen, dass die Tablare beim Übergabevorgang der zusammengestellten Waren in einer sicheren Ausrichtung auf der zweiten Förderbahn stehen, die die Ablage in dem vom Rechner festgelegten Raster gewährleistet, werden die Tablare auf der zweiten Förderbahn während der Übergabe der Waren in einer Übemahmeposition zwischen zwei in der Förderbahn in den Transportweg der Tablare vorgesehenen heb- und senkbaren Anschlägen festgelegt. Diese Anschläge werden zwischen den Rollen der Förderbahn angehoben. Der in Transportrichtung stromabwärts gelegene Anschlag wird zunächst hochgefahren, um das herantransportierte Tablar zu stoppen, im Anschluss daran wird hinter dem Tablar ein zweiter Abschlag hochgefahren, durch den die Position des Tablars auf der Förderbahn fixiert ist. Beide Anschläge können neben ihrer vertikalen Bewegung eine leichte Schwenkbewegung in Richtung auf das Tablar zu ausführen, so dass eine sichere Fixierung durch Klammern der Tablare zwischen den Anschlägen möglich ist.

Das Anfördern der leeren Tablare erfolgt vorzugsweise auf der zweiten Förderbahn, die sich hinter dem Übergabebereich fortsetzt und auch zum Abtransport der mit Waren belegten Tablare dient.

Vorteilhafterweise wird beim Überführen der zweiten und gegebenenfalls weiterer Reihen dicht hintereinanderliegender Waren diese zusammen mit der ersten Reihe auf dem Ladungsträger verschoben. In einem solchen Fall wird die Übergabevorrichtung bei ihrem ersten Übergabehub eine erste Reihe Waren an den vorderen Rand des Ladungsträgers verschieben und diese erste Reihe beim zweiten Übergabehub zusammen mit der überführten zweiten Reihe auf dem Ladungsträger so verschieben, dass beide Reihen platzoptimiert auf dem Ladungsträger liegen.

Die platzoptimierte Lagerung setzt gegebenenfalls voraus, dass Waren, die in der aufgegebenen Ausrichtung nicht dem geforderten Belegraster entsprechen, vor dem Übergabebereich um 90° gedreht werden.

Die vorgeschlagene Vorrichtung und das Verfahren zum lagegerechten Übergeben von quaderförmigen Waren auf einen Ladungsträger ermöglichen eine technisch sichere und wirtschaftliche Kartonverdichtung zur platzsparenden Lagerung. Die Funktionseinheit in in sich geschlossener Bauweise ist sehr kompakt und erfüllt alle Funktionen auf kleinstem Raum. Durch die zeitlich überlagerten und parallelen Abläufe beim Verdichten und Übergeben der Waren lässt sich der Durchsatz der Vorrichtung deutlich erhöhen, so dass nicht nur größere Mengen von Waren eingelagert werden können, sondern die Einlagerung auch in kürzerer Zeit erfolgen kann. Dabei ist die Vorrichtung zum Drehen der Waren besonders hilfreich, weil sie ein schnelles und sicheres Umorientieren der Waren ermöglicht.

Ein Ausführungsbeispiel der Erfindung ist in der Zeichnung dargestellt und wird nachfolgend beschrieben.

Es zeigt:
- Figur 1: eine Draufsicht auf die Vorrichtung nach der Erfindung,
- Figur 2: einen Querschnitt durch die Vorrichtung und den Schieber,
- Figur 3: in schematischer Darstellung quaderförmige Waren in unterschiedlichen Belegrastem,
- Figur 4: eine Draufsicht auf die Vorrichtung zum Umorientieren der Ausrichtung der Waren und
- Figur 5: einen Querschnitt durch die Vorrichtung nach Figur 4.

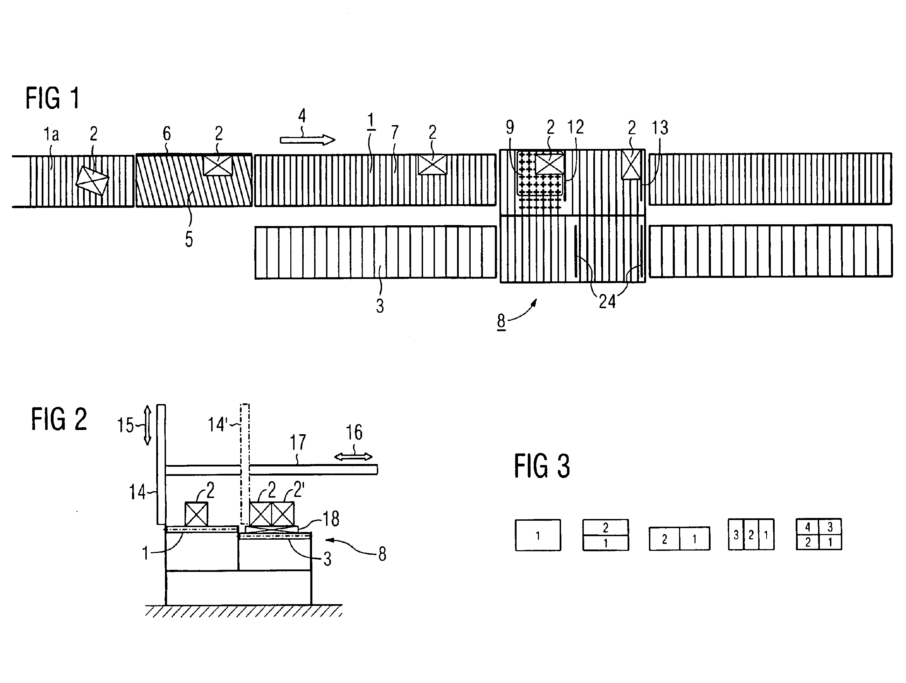

In Figur 1 ist mit 1 insgesamt eine erste Förderbahn bezeichnet, von der quaderförmige Waren 2 eines Warenstroms, beispielsweise Pakete, auf eine benachbarte, parallel zur Förderbahn 1 verlaufende zweite Förderbahn 3 übergeben werden. Die erste Förderbahn beinhaltet einen Zuförderer 1a, der beispielsweise als Rollenförderer mit angetrieben Rollen ausgebildet ist und der die Ware 2 von einer nicht dargestellten Aufgabestation in Transportrichtung 4 transportiert. In oder vor der Aufgabestation werden die geometrischen Daten der Ware in bekannter Weise erfaßt und in einem Rechner abgespeichert. Die zunächst ungeordnet auf dem Zuförderer 1a aufliegende Ware 2 wird auf den Schrägrollenförderer 5 übergeben und beim Weitertransport in Transportrichtung 4 durch die gegen die Transportrichtung geneigten Transportrollen gegen eine Begrenzungswand 6 geführt und dort so ausgerichtet, dass eine der Seitenflächen der quaderförmigen Ware parallel zur Transportrichtung verläuft. Die ausgerichtete Ware 2 wird auf einem anschließenden Fördererabschnitt 7 der ersten Förderbahn 1 in Richtung einer Übergabevorrichtung 8 weiter transportiert. Im Bereich der Übergabevorrichtung 8 oder unmittelbar davor befindet sich eine Vorrichtung 9 zum Umorientieren der Ware 2, mit der die Ware ggf. um eine vertikale Achse um 90° zu der Ausrichtung gedreht wird, in der die Ware antransportiert wurde.

Die Vorrichtung 9 zum Umorientieren der Waren besteht im wesentlichen aus einem heb- und senkbaren sowie um eine vertikale Achse verschwenk- oder verdrehbaren Tisch 10, der in seinen Einzelheiten später noch beschrieben wird. Auf dem Tisch 10 der Vorrichtung 9 wird die Ware 2 mittels eines der Förderbahn 1 zugeordneten Stoppers 12 angehalten, der in vertikaler Richtung aus seiner Position unterhalb der Transportebene der Waren 2 in eine Position oberhalb der Transportebene verfahrbar ist. Nach dem Umorientieren der Ware 2, d.h. nachdem die Ware 2 erforderlichenfalls um 90° gedreht wurde, wird der Anschlag 12 wieder unter die Transportebene abgesenkt, so dass die Ware über den im Bereich der Übergabevorrichtung 8 fortgesetzten Rollgang der ersten Förderbahn 1 weiterbewegt wird, bis sie stirnseitig gegen einen ebenfalls heb- und senkbaren Stopper 13 zur Anlage kommt, der in die Transportebene der Fördebahn 1 gefahren wurde. Dort wird die Ware 2 so lange angehalten, bis eine gewünschte Anzahl ausgerichteter und gegebenenfalls entsprechend einem vorgesehenen Raster umorientierter Waren im Bereich der Übergabevorrichtung 8 gesammelt ist, und zwar bereits in einer solchen Ausrichtung, die der späteren Orientierung nach dem Übergeben der Waren auf den zweiten Förderer 3 entspricht. Die Länge der aneinandergereihten Waren 2 entspricht dabei im Regelfall etwa der Länge des Warenträgers, auf den die gebildete lagerfähige Einheit verschoben werden soll.

Wie in Figur 2 schematisch dargestellt, liegt eine Ware 2 auf der Förderbahn 1 innerhalb der Übergabevorrichtung 8 auf. Die dargestellte Ware ist ausgerichtet und, wie erforderlich, in der richtigen Lage orientiert. Nicht erkennbar in Figur 2 ist, dass hinter der Ware 2, d.h. senkrecht zur Zeichnungsebene (also in Transportrichtung der Förderbahn 1) eine weitere Ware gleicher Abmessung liegt. In der Zeichnung links von der auf der Förderbahn 1 aufliegenden Ware 2 ist ein Schieber 14 zu erkennen, der, wie durch den Doppelpfeil 15 angedeutet, heb- und senkbar ist. Zudem ist der Schieber 14, wie bei 16 durch den Doppelpfeil angedeutet, entlang der Führung 17 nach beiden Seiten bewegbar. Der Schieber 14 wird aus seiner dargestellten Position durch einen (nicht gezeichneten) Pneumatikzylinder in die strichpunktiert dargestellte Stellung 14' verbracht. Dabei werden die Waren 2 von der ersten Förderbahn 1 auf ein Tablar 18 verschoben, das auf der zweiten Förderbahn 3 aufliegt.

Auf dem in Figur 2 dargestellten Tablar 18 liegen zwei Reihen von mit 2 und 2' bezeichneten Waren. Vorzugsweise werden diese Reihen einzeln übergeben, wobei die erste Reihe zunächst auf der dem Schieber 14 zugewandten Hälfte des Tablars 18 abgelegt wird, um diese Reihe beim nächsten Hub des Schiebers 14 zusammen mit der zweiten Reihe in die endgültige Position auf dem Tablar 18 zu verschieben. Sobald ein Übergabehub beendet ist, wird der Schieber 14, wie durch den nach oben weisenden Pfeil 15 angedeutet angehoben und durch Querbewegung in Pfeilrichtung 16 (nach links) über die zwischenzeitlich auf der ersten Förderbahn 1 angesammelte Ware 2 hinweg in seine Ausgangsposition zurück geführt. Auf diese Weise wird sichergestellt, dass das Ausrichten und Verdichten der Waren 2 auf der ersten Förderbahn 1 zeitgleich mit der Übergabe bereits ausgerichteter Waren 2 bzw. 2' auf die zweite Förderbahn 3 bzw. die darauf aufliegenden Tablare 18 erfolgen kann.

In Figur 3 sind fünf Beispiele dargestellt, in welcher Form ein Belegraster auf dem Tablar nach der Erfindung jeweils ausgebildet sein kann. Von links nach rechts gesehen zeigt die erste Darstellung eine einzige quaderförmige Ware, die das Tablar vollständig belegt. Daneben sind in zwei Darstellungen jeweils zwei gleich große Waren nebeneinander oder hintereinander dargestellt, so dass sie das Tablar optimal ausfüllen. Die beiden rechten Darstellungen zeigen zum Einen drei nebeneinander liegende und zum Anderen vier symmetrisch in zwei Reihen ausgerichtete Waren, die nach der Lehre der Erfindung, computergesteuert verdichtet wurden. Aus den Darstellungen wird deutlich, dass neben der Verdichtung vor allem der richtigen Ausrichtung und Orientierung der Waren große Bedeutung zukommt. Die Orientierung und Ausrichtung erfolgt dabei gezielt nach dem im Rechner abgelegten Programm, in dem die Abmessungen der Tablare einerseits und alle möglichen mit den zu transportierenden Waren zu bildenden Raster andererseits abgelegt sind. In Kenntnis der Längen- und Breitenabmessungen der Waren, brauchen diese nur noch ausgerichtet und ggf. gedreht zu werden, um diese in Übereinstimmung mit einem der in Figur 3 exemplarisch dargestellten Belegmuster zu bringen.

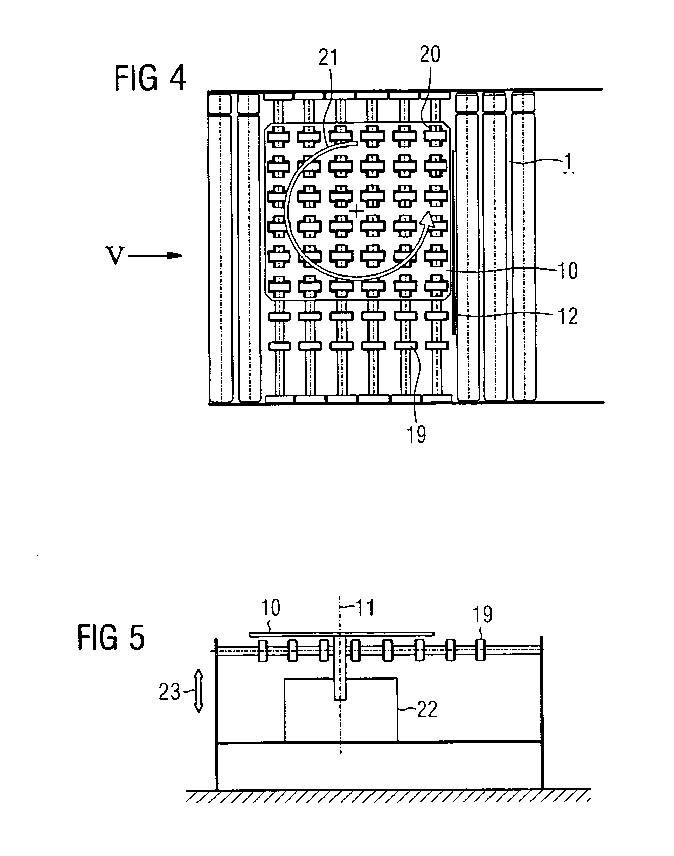

Die Vorrichtung zum Umorientieren der Ware 2 ist in Figur 4 in der Draufsicht dargestellt. Erkennbar ist ein Abschnitt der ersten aus angetriebenen Rollen bestehenden Förderbahn 1, in deren Verlauf die zunächst in Förderbahnbreite durchgehenden zylindrischen Rollen durch schmale Einzelrollen 19 ersetzt sind, indem diese in gleichen Abständen in der Ebene der ersten Förderbahn 1 gelagert sind. Die Rollen 19 sind so angeordnet, dass sie mindestens mit Teilen ihres Umfanges entsprechend geformte Ausnehmungen 20 im Tisch 10 durchdringen, solange sich dieser Tisch 10 in einer abgesenkten Position befindet. Die über die Oberfläche des Tischs 10 hervorragenden Umfangsbereiche der Rollen 19 gestatten zunächst ein Transportieren der Ware in herkömmlicher Weise in der Transportrichtung 4 der Förderbahn 1. Wird durch eine mit herkömmlichen Mitteln durchgeführte Messung festgestellt, dass eine Ware 2 in einer Ausrichtung die Übergabevorrichtung 8 ansteuert, die nicht der vorgesehenn optimalen Ausrichtung zur rastergerechten Übergabe auf das Tablar 18 entspricht, wird also z.B. eine Ware statt in Längsrichtung in Querrichtung transportiert, so wird ein Anschlag 12 in die Transportebene der Ware angehoben, so dass die Ware gegen den Anschlag 12 in einer Position oberhalb des Tisches 10 gestoppt wird.

Durch Anheben des Tischs 10 mit seiner Auflageebene über die Rollen 19 wird erreicht, dass die Ware nunmehr nur noch auf dem Tisch 10 aufliegt. Durch Drehen des Tischs 10 um eine zentrale vertikale Achse 11 wird dieser zusammen mit der Ware um 90° gedreht und unmittelbar im Anschluss daran wieder in die Ausgangslage abgesenkt. Da die Öffnungen 20 im Tisch symmetrisch ausgebildet sind, und zwar sowohl bezogen auf die Anzahl der Rollen 19 wie auch auf die Öffnungen kommt die Ware nach Absenken des Tischs 10 wieder auf den die Tischoberfläche durchdringenden Rollen 19 zu liegen. Nach Absenken des Anschlags 12 kann sodann die Ware 2 in der nunmehr neuen Orientierung in die Übergabestation 8 transportiert werden.

In Figur 5 ist in einem Querschnitt grob schematisch der Tisch 10 dargestellt, der hier in einer angehobenen Position oberhalb der Rollen 19 positioniert ist. Die Hub- und Drehvorrichtung ist nur schematisch angedeutet und mit 22 bezeichnet. Die Heb- und Senkrichtung des Tisches 10 ist bei 23 symbolisiert, die vertikale Drehachse ist bei 11 erkennbar.

Das Verfahren funktioniert wie folgt:

In einer (nicht dargestellten) Messvorrichtung werden die Geometriedaten der Waren 2 erfasst, sobald sie auf den Zuführrollgang der ersten Förderbahn 1 aufgelegt wurden. Die Ware 2 wird über den angetriebenen Zuförderer 1a, beispielsweise einen Rollenförderer, in den Bereich des Schrägrollganges 5 transportiert, wo die Ware 2 mit Hilfe schräggestellter angetriebener Rollen gegen die Begrenzungswand 6 geführt und dort in Transportrichtung ausgerichtet wird. Auf dem sich anschließend fortsetzenden Rollgang der Förderbahn 1 wird die Ware 2 in den Bereich der Übergabevorrichtung 8 transportiert, wo sie zunächst hinsichtlich ihrer Ausrichtung und Orientierung auf der Förderbahn 1 überprüft wird. Wird bei der Überprüfung festgestellt, dass die herantransportierte Ware 2 hinsichtlich ihrer Ausrichtung und Orientierung nicht derjenigen Ausrichtung und Orientierung entspricht, die nach der späteren Ablage auf dem Tablar 18 vorgesehen ist, wird die Ware 2 im Bereich der Vorrichtung 9 zum Umorientieren gestoppt. Dies geschieht durch Hochfahren des Stoppers 12 in die Transportebene der Ware 2, so dass diese oberhalb des abgesenkten Tisches 10 auf den dort angeordneten Rollen 19 liegen bleibt, welche in diesem Bereich die durchgehenden Rollen der Förderbahn 1 ersetzen.

Sodann wird der Tisch 10 angehoben und zusammen mit der Ware 2 oberhalb der Rollen 19, von denen die Ware nun abgehoben ist, gedreht. Nach Drehung um 90°, die in Figur 4 durch den Pfeil 21 angedeutet ist, wird der Tisch 10 wieder abgesenkt, so dass die Ware 2 wieder von den den Tisch durchdringenden Rollen getragen wird. Nach Absenken des Stoppers 12 wird die Ware 2 auf der Förderbahn gegen einen zweiten Stopper 13 am Ende der Übergabevorrichtung 8 transportiert und dort festgehalten, um die Ware mit nachfolgender Ware zu verdichten, bis die gewünschte Anzahl von Waren erreicht ist. Durch Querverschieben mittels des Schiebers 14 wird nun die verdichtete Ware in der im Computer festgelegten Ausrichtung und Orientierung auf die zweite benachbarte Förderbahn 3 überführt, auf der in der Zwischenzeit ein Tablar 18 herantransportiert wurde. Dieses Tablar wird auf der zweiten Förderbahn 3 zwischen zwei heb- und senkbaren Anschlägen 24 fixiert und steht zur Übernahme der verdichteten Ware 2 bereit.

Schon während des Überführens der Waren 2 auf das Tablar 18 kann auf der Rückseite des Schiebers 14 bereits eine neue Reihe von Waren 2 bzw. 2' zusammengestellt und verdichtet werden; denn der Schieber 14 wird beim Zurückführen in seine Ausgangsposition über die auf der Förderbahn 1 der Übergabevorrichtung 8 gebildete und abgelegte Ware 2 hinweggehoben. Sobald das Tablar 18 in einem der in Figur 3 dargestellten Raster belegt ist, werden die Anschläge 24 auf der zweiten Förderbahn 3 wieder abgesenkt, so dass das Tablar 18 über die zweite Förderbahn 3 (in der Zeichnung nach rechts) abtransportiert werden kann.

## Patentansprüche

1. Vorrichtung zum geordneten Ablegen von quaderförmigen Waren (2) eines Warenstromes, wie Kartons, Pakete oder dergleichen, auf einem transportierbaren Ladungsträger (18), mit
- einer ersten Förderbahn (1) auf welcher die vorsortierten Waren einem Übergabebereich zugeführt werden; und
- einem Rechner, um unter Verwertung von Geometriedaten der vorsortierten Waren (2) und unter Berücksichtigung der Lagerfläche des Ladungsträgers (18) ein Belegraster für alle auf einem Ladungsträger (18) verdichtet abzulegenden Waren (2) zu ermitteln,
wobei im Übergabebereich der ersten Förderbahn (1) eine auf dem Ladungsträger (18) lagerfähige und dem Belegraster entsprechenden Einheit aus einer oder mehreren parallel zur Transportrichtung (4) ausgerichteten, ggf. um 90° gegenüber der Transportrichtung (4) gedrehten Waren (2) gebildet wird, die mit einem Übergabehub quer zur Transportrichtung (4) der Förderbahn auf den Ladungsträger (18) überführt wird,
**dadurch gekennzeichnet,**
**dass** eine Messeinrichtung zur Erfassung mindestens der Geometrie jeder Ware auf der ersten Förderbahn (1) vorgesehen ist, wobei der Rechner unter Verwertung dieser erfaßten Geometriedaten ein platzoptimiertes Belegraster ermittelt, und
**dass** eine von der ersten Förderbahn (1) benachbarte zweite Förderbahn (3) zum Transportieren von Ladungsträgern (18) vorgesehen ist, so dass die lagerfähige Einheit im Übergabebereich der ersten Förderbahn (1) auf einen auf dieser zweiten Förderbahn (3) liegenden Ladungsträger (18) überführt wird.

2. Vorrichtung nach Anspruch 1,
**dadurch gekennzeichnet,**
**dass** die quaderförmigen Waren (2) nach Aufgabe auf die erste Förderbahn (1) in Transportrichtung hintereinanderliegend aufgereiht verdichtet und lageoptimiert ausgerichtet quer zur Transportrichtung (4) auf den Ladungsträger (18) überführbar sind.

3. Vorrichtung nach Anspruch 1 und 2,
**dadurch gekennzeichnet,**
**dass** zur Ausrichtung der Waren (2) diese quer zur Transportrichtung (4) gegen eine im Bereich der ersten Förderbahn (1) vorgesehene seitliche Begrenzung (6) führbar sind und zur Verdichtung in Transportrichtung (4) gegen einen in den Förderweg bewegbaren Anschlag (13) am Ende des Übergabebereiches transportierbar sind

4. Vorrichtung nach Anspruch 3,
**dadurch gekennzeichnet,**
**dass** zur Ausrichtung der Ware (2) an der seitlichen Begrenzung (6) die erste Förderbahn (1) mindestens bereichsweise als Schrägrollenförderer (5) ausgebildet ist.

5. Vorrichtung nach Anspruch 1 bis 4,
**dadurch gekennzeichnet,**
**dass** vor dem Übergabebereich der ersten Förderbahn (1) eine Vorrichtung (9) zum Umorientierung der Ausrichtung der Waren (2) vorgesehen ist, mit der die einzelne Ware (2) bedarfsweise in einer horizontalen Auflageebene um 90° verdrehbar ist.

6. Vorrichtung nach Anspruch 5,
**dadurch gekennzeichnet,**
**dass** die Vorrichtung (9) zum Umorientierung der Ausrichtung der Waren (2) aus einer heb- und senkbaren sowie um eine vertikale Achse (11) dreh- oder verschwenkbaren horizontalen Auflageplatte (10) mit einer Vielzahl von Ausnehmungen (20) besteht, die jeweils in der abgesenkten Stellung der Auflageplatte (10) von den Rollen (19) einer in Transportrichtung (4) ausgerichteten Rollenbahn mindestens teilweise durchdrungen werden und in der angehobenen Stellung über den Außenumfang der Rollen (19), das Verdrehen oder Verschwenken der Auflageplatte (10) gestattend, positionierbar sind.

7. Vorrichtung nach Anspruch 6,
**dadurch gekennzeichnet,**
**dass** für das Bewegen der Auflageplatte (10) ein pneumatischer Antrieb vorgesehen ist.

8. Vorrichtung nach einem der Ansprüche 1 bis 7,
**dadurch gekennzeichnet,**
**dass** zur Bildung von übereinanderliegenden Lagen von Waren (2) in einem weiteren platzoptimierten Belegraster die Ladungsträger (18) absenkbar oder eine Übergabevorrichtung (8) anhebbar ist.

9. Vorrichtung nach einem der Ansprüche 1 bis 8,
**dadurch gekennzeichnet,**
**dass** eine Übergabevorrichtung (8) mit einem horizontal bewegbaren Schieber (14) zusammenwirkt, der auf seinem Rückhub in die Ausgangslage über eine im Übergabebereich auf der ersten Förderbahn (1) in Transportrichtung (4) hintereinanderliegende lageoptimiert verdichtete Reihe von Waren (2) hinweghebbar und auf der der zweiten Förderbahn (3) abgewandten Seite hinter dieser Reihe von Waren (2) absenkbar ist.

10. Vorrichtung nach einem der Ansprüche 1 bis 9,
**dadurch gekennzeichnet,**
**dass** das Bilden einer zweiten lageoptimiert verdichteten Reihe von Waren (2) auf der ersten Förderbahn (1) und das Übergeben der ersten lageoptimiert verdichteten Reihe von Waren (2) auf den Ladungsträger (18) der zweiten Förderbahn (3) etwa zeitgleich durchführbar ist.

11. Vorrichtung nach einem der Ansprüche 8 bis 10,
**dadurch gekennzeichnet,**
**dass** die Ladungsträger (18) aus mit Durchgriffsschlitzen versehenen Tablaren bestehen, die von an der Übergabevorrichtung (8) vorgesehenen Anheberechen durchdringbar sind.

12. Vorrichtung nach Anspruch 11,
**dadurch gekennzeichnet,**
**dass** die Tablare (18) auf der zweiten Förderbahn (3) während der Übergabe der Waren (2) in einer Übernahmeposition zwischen zwei in der Förderbahn vorgesehenen heb- und senkbaren Anschlägen (24) festlegbar sind.

13. Vorrichtung nach Anspruch 10,
**dadurch gekennzeichnet,**
**dass** die leeren Tablare (18) auf der zweiten Förderbahn (3) in den Übergabebereich förderbar und nach dem Überführen der Waren (2) in gleicher Transportrichtung abtransportierbar sind.

14. Verfahren zum lagegerechten Übergeben von quaderförmigen Waren (2) eines Warenstromes, wie Kartons, Pakete oder dergleichen, von einer ersten Förderbahn (1) auf eine im Übergabebereich benachbarte zweite Förderbahn (3) sowie zum geordneten Ablegen der Waren (2) auf einem auf der zweiten Förderbahn (3) transportierbaren Ladungsträger (18), wobei im Übergabebereich der ersten Förderbahn (1) nach vorheriger Erfassung mindestens der Geometrie jeder ware (2) eine auf dem Ladungsträger (18) lagerfähige Einheit aus einer oder mehreren, parallel zur Transportrichtung (4) ausgerichteten, ggf. um 90° gegenüber der Transportrichtung (4) gedrehten Waren (2) gebildet wird, die mit einem Übergabehub quer zur Transportrichtung (4) der Förderbahn auf den Ladungsträger (18) überführt wird, mit dem folgenden Arbeitsschritten:
a. die vorsortierten Waren (2) worden auf einer ersten Förderbahn (1) einzeln nacheinander dem Übergabebereich zugeführt.
b. Jede Ware (2) wird durch eine quer zur Transportrichtung (4) wirkende Kraftkomponente gegen die seitliche Begrenzung der ersten Förderbahn (1) geführt und dort mit einer ihrer Seitenflächen in Transportrichtung (4) ausgerichtet.
c. Die geometrischen Abmessungen der Waren (2) und deren Ausrichtung auf der ersten Förderbahn (1) werden sensorisch erfasst.
d. Unter Verwertung der erfassten Geometriedaten, der Ware (2) wird unter Berücksichtigung der Lagerfläche des Ladungstragers (18) im Rechner ein platzoptimiertas Belegraster ermittelt und festgelegt.
e. Entsprechend dem festgelegten Belegraster wird die Ware (2) im Obergabebereich zu einer lagerfähigen Einheit aus in Reihe dicht hintereinanderliegenden Waren (2) zusammengestellt.
f. Die lagerfähige Einheit aus in Reihe dicht hintereinanderliegenden Waren (2) wird auf den auf der zweiten Förderbahn (3) liegenden Ladungsträger (18) überführt.
g. Gegebenfalls wird mindestens eine weitere Reihe dicht hintereinanderliegender Waren (2) zeitgleich zu der Überführung der ersten Reihe im Übergabebereich zusammengestellt und anschließend auf den gleichen Ladungsträger (18) überführt.

15. Verfahren nach Anspruch 14,
**dadurch gekennzeichnet,**
**dass** beim Überführen der zweiten und ggf. weiterer Reihen dicht hintereinanderliegender Waren (2) diese zusammen mit der ersten Reihe auf dem Ladungsträger (18) verschoben wird bzw. werden.

16. Verfahren nach Anspruch 14 und 15,
**dadurch gekennzeichnet,**
**dass** Waren (2) die in der aufgegebenen Ausrichtung nicht dem geforderten Belegraster entsprechen, vor dem Übergabebereich um 90° gedreht werden.

## Claims

1. Arrangement for the ordered deposit of parallelepiped goods items (2) belonging to a stream of goods items, such as cardboard boxes, parcels or the like, on a transportable load-carrier (18), having
- a first conveyor (1) on which the pre-sorted goods items are fed to a transfer region, and
- a computer for, by making use of geometrical data on the pre-sorted goods items (2) and by taking into account the storage area on the load-carrier (18), determining an occupancy-defining grid for all the goods items (2) which are to be deposited in a closely packed form on a load-carner (18),
there being formed, in the transfer region of the first conveyor (1), a unit, able to be stored on the load-carrier (18), which conforms to the occupancy-defining grid and which comprises one or more goods items (2) which are aligned parallel to the direction of transport (4) or, if required, are rotated through 90° relative to the direction of transport (4), which unit is transferred to the load-carrier (18) by a transfer stroke transverse to the direction of transport (4) of the conveyor,
**characterised**
**in that** a measuring means is provided for sensing at least the geometry of each goods item on the first conveyor (1), the computer determining an occupancy-defining grid which is optimised for the available space by making use of this geometrical data which is sensed, and
**in that** a second conveyor (3) adjacent to the first conveyor (1) is provided to transport load-carners (18), so that the storable unit is transferred, in the transfer region of the first conveyor (1), to a load-carrier (18) situated on the said second conveyor (3).

2. Arrangement according to claim 1, **characterised in that**, having been loaded onto the first conveyor (1) in such a way as to be lined up one behind the other in the direction of transport, the parallelepiped goods items (2) can be transferred to the load-carrier (18), transversely to the direction of transport (4), in such a way as to be aligned to be closely packed and in an optimised position.

3. Arrangement according to claims 1 and 2, **characterised in that**, to allow the goods items (2) to be aligned, they can be fed to come up against a lateral boundary means (6) which is provided in the region of the first conveyor (1) and, to allow them to be packed together in the direction of transport (4), can be transported to come up against an abutment (13), at the end of the transfer region, which can be moved into the path of conveyance.

4. Arrangement according to claim 3, **characterised in that**, to allow the goods item (2) to be aligned against the lateral boundary means (6), the first conveyor (1) takes the form, at least in a region or regions, of a conveyor (5) having obliquely orientated rollers.

5. Arrangement according to claims 1 to 4, **characterised in that** there is provided, upstream of the transfer region of the first conveyor (1), an arrangement (9) for re-orientating the alignment of the goods items (2), by which arrangement (9) the individual goods item can, if required, be rotated through 90° in a horizontal plane in which it rests down.

6. Arrangement according to claim 5, **characterised in that** the arrangement (9) for re-orientating the alignment of the goods items (2) comprises a horizontal support plate (10) which is able to be raised and lowered and to be rotated or swivelled about a vertical axis (11) and which has a plurality of openings (20) through respective ones of which the rollers (19) of a train of rollers aligned in the direction of transport pass, at least partly, when the support plate (10) is in the lowered position, which openings (2), when it is in the raised position, can be positioned above the outer circumferences of the rollers (19), thus allowing the support plate (10) to be rotated or swivelled.

7. Arrangement according to claim 6, **characterised in that** a pneumatic drive is provided to move the support plate (10).

8. Arrangement according to one of claims 1 to 7, **characterised in that**, to allow superimposed layers of goods items (2) be formed in a further occupancy-defining grid which is optimised for the available space, the load-carriers (18) can be lowered or a transfer arrangement (8) can be raised.

9. Arrangement according to one of claims 1 to 8, **characterised in that** a transfer arrangement (8) co-operates with a horizontally movable slider (14), which slider (14), on its return stroke to its starting position, can be lifted over a line of goods items (2) which, in the transfer region, are situated one behind the other in the direction of transport (4) on the first conveyor (1) and are closely packed in optimised positions, and which slider (14) can be lowered behind the said line of goods items (2) on the side remote from the second conveyor (3).

10. Arrangement according to one of claims 1 to 9, **characterised in that** the forming on the first conveyor (1) of a second line of goods items (2) which are closely packed in optimised positions, and the transfer of the first line of goods items (2) which are closely packed in optimised positions to the load-carrier (18) on the second conveyor (3) can be performed approximately simultaneously.

11. Arrangement according to one of claims 8 to 10, **characterised in that** the load-carriers (18) comprise platforms which are provided with slots for passage through which comb-like raising means provided on the transfer arrangement (8) are able to pass.

12. Arrangement according to claim 11, **characterised in that**, during the transfer of the goods items (2), the platforms (18) can be immobilised in a takeover position on the second conveyor (3) between two raisable and lowerable abutments (24) which are provided in the conveyor.

13. Arrangement according to claim 10, **characterised in that**, on the second conveyor (3), the empty platforms (18) can be fed into the transfer region and after the transfer of the goods items (2) can be transported away in the same direction of transport.

14. Method for the transfer of appropriately positioned parallelepiped goods items (2) belonging to a streams of goods items, such as cardboard boxes, parcels, or the like, from a first conveyor (1) to a second conveyor (3) which is adjacent in the transfer region, and for the ordered deposit of the goods items (2) on a load-carrier (18) able to be transported on the second conveyor (3), there being formed, in the transfer region of the first conveyor (1), after previous sensing at least of the geometry of each goods item (2), a unit, able to be stored on the load-carrier (18), which comprises one or more goods items (2) which are aligned parallel to the direction of transport (4) or, if required, are rotated through 90° relative to the direction of transport (4), which unit is transferred to the load-carrier (18) by a transfer stroke transverse to the direction of transport (4) of the conveyor, the method having the following working steps:
a. the pre-sorted goods items (2) are fed individually, one after another, to the transfer region on a first conveyor (1),
b. Each goods item (2) is fed to come up against the lateral boundary means of the first conveyor (1) by a component of force acting transversely to the direction of transport (4) and is aligned there in the direction of transport (4) by one of its side-faces.
c. The geometrical dimensions of the goods items (2) and their alignment are sensed on the first conveyor (1) by sensor means.
d. By making use of the geometrical data on the goods items (2) which is sensed, an occupancy-defining grid which is optimised for the available space is determined and laid down in the computer by taking into account the storage area on the load-carrier (18).
e. In line with the occupancy-defining grid which is laid down, the item of goods (2) is assembled, in the transfer region, into a storable unit comprising goods items (2) which are situated close behind one another in a line.
f. The storable unit (2) comprising goods items (2) which are situated close behind one another in a line is transferred to the load-carner (18) situated on the second conveyor (3).
g. If required, at least one further line of goods units (2) which are situated close behind one another is assembled in the transfer region and then transferred to the same load-carrier (18) at the same time as the first line is transferred.

15. Method according to claim 14, **characterised in that**, when the second and, if required, further lines of goods items (2) which are situated close behind one another, are transferred, this line is or these lines are displaced on the load-carner (18) together with the first line.

16. Method according to claims 14 and 15, **characterised in that** goods items (2) which do not conform to the required occupancy-defining grid in the alignment in which they are loaded on are rotated through 90° upstream of the transfer region.

## Revendications

1. Dispositif pour ranger de façon ordonnée des articles parallélépipédiques (2) d'un flux d'articles, comme des cartons, des paquets ou analogues, sur un support de charges transportable (18), ledit dispositif comportant
- une première bande transporteuse (1) sur laquelle les articles préalablement triés sont amenés à une région de transfert ; et
- un ordinateur destiné à déterminer une matrice de rangement de tous les articles (2) à ranger de façon serrée sur un support de charges (18) en exploitant des données géométriques des articles (2) préalablement triés et en tenant compte de la surface de stockage du support de charges (18) ;
une unité, qui correspond à la matrice de rangement, qui est stockable sur le support de charges (18) et qui est constituée d'un ou plusieurs articles orientés parallèlement à la direction de transport (4), en étant éventuellement tournés de 90° par rapport à la direction de transport (4), étant formée dans la région de transfert de la première bande transporteuse (1) et étant transférée sur le support de charges (18), transversalement à la direction de transport (4) de la bande transporteuse, au moyen d'un élévateur de transfert,
**caractérisé en ce que**
il est prévu un dispositif de mesure destiné à déterminer au moins la géométrie de chaque article sur le première bande transporteuse (1), l'ordinateur déterminant une matrice de rangement optimisé en exploitant ces données géométriques déterminées, et
**en ce qu'**il est prévu une deuxième bande transporteuse (3), adjacente à la première bande transporteuse (1) et destinée à transporter des supports de charges (18) de sorte que l'unité stockable est transférée, dans la région de transfert de la première bande transporteuse (1), sur un support de charges (18) se trouvant sur cette deuxième bande transporteuse (3).

2. Dispositif selon la revendication 1, **caractérisé en ce que**, après avoir été délivrés sur la première bande transporteuse (1), les articles parallélépipédiques (2) sont transférables sur le support de charges (18) en étant rangés et serrés l'un derrière l'autre par référence à la direction de transport et en étant orientés et optimisés en position transversalement à la direction de transport (4).

3. Dispositif selon les revendications 1 et 2, **caractérisé en ce que**, pour orienter les articles (2), ceux-ci peuvent être guidés transversalement à la direction de transport (4) contre une limite latérale (6) prévue dans la région de la première bande transporteuse (1) et peuvent être transportés contre une butée (13), mobile dans le chemin de transport et située à l'extrémité de la région de transfert, afin de les serrer dans la direction de transport (4).

4. Dispositif selon la revendication 3, **caractérisé en ce que**, pour orienter les articles (2) contre la limite latérale (6), la première bande transporteuse (1) est conformée au moins par zones en transporteur à rouleaux obliques (5).

5. Dispositif selon les revendications 1 à 4, **caractérisé en ce que**, en avant de la région de transfert de la première bande transporteuse (1), il est prévu un dispositif (9) pour modifier l'orientation des articles (2) avec lequel, si besoin est, les articles individuels (2) peuvent être tournés de 90° dans un plan de support horizontal.

6. Dispositif selon la revendication 5, **caractérisé en ce que** le dispositif (9) pour modifier l'orientation des articles (2) est constitué d'une plaque de support horizontale (10) qui est apte à être levée et abaissée ainsi qu'à être tournée ou pivotée autour d'un axe vertical (11) et qui comporte un grand nombre d'évidements (20) qui sont traversés au moins partiellement respectivement, lorsque la plaque de support (10) est abaissée, par les rouleaux (19) d'une bande de rouleaux orientée dans la direction de transport (4) et qui peuvent être positionnés en position soulevée au-dessus de la périphérie extérieure des rouleaux (19), en permettant à la plaque de support (10) de tourner ou de pivoter.

7. Dispositif selon la revendication 6, **caractérisé en ce qu'**il est prévu un entraînement automatique pour déplacer la plaque de support (10).

8. Dispositif selon l'une des revendications 1 à 7, **caractérisé en ce que**, pour former des couches superposées d'articles (2) suivant une autre matrice de rangement optimisé, les supports de charges (18) peuvent être abaissés ou un dispositif de transfert (8) peut être soulevé.

9. Dispositif selon l'une des revendications 1 à 8, **caractérisé en ce qu'**un dispositif de transfert (8) coopère avec une coulisse (14), mobile horizontalement, qui peut être soulevée au-dessus d'une rangée d'articles (2) serrés, en étant optimisés en position, l'un derrière l'autre par référence à la direction de transport (4) dans la région de transfert sur la première bande transporteuse (1) et qui peut être abaissée, du côté opposé à la deuxième bande transporteuse (3), en arrière de cette rangée d'articles (2).

10. Dispositif selon l'une des revendications 1 à 9, **caractérisé en ce que** la formation d'une deuxième rangée d'articles (2), serrés en étant optimisés en position, sur la première bande transporteuse (1) et le transfert de la première rangée d'articles (2), serrés en étant optimisés en position, sur le support de charges (18) de la deuxième bande transporteuse (3) peuvent être effectués à peu près en même temps.

11. Dispositif selon l'une des revendications 8 à 10, **caractérisé en ce que** les supports de charges (18) sont constitués de plateaux, dotés de fentes de pénétration, qui peuvent être traversés par des râteaux de levage prévus au niveau du dispositif de transfert (8).

12. Dispositif selon la revendication 11, **caractérisé en ce que** les plateaux (18) peuvent être fixés sur la deuxième bande transporteuse (3) pendant le transfert des articles (2) dans une position de prise en charge située entre deux butées (24) qui peuvent être soulevées et abaissées et qui sont prévues dans la bande transporteuse.

13. Dispositif selon la revendication 10, **caractérisé en ce que** les plateaux vides (18) sur la deuxième bande transporteuse (3) peuvent être transportés dans la région de transfert et, après le transfert des articles (2), ils peuvent être emportés dans une même direction de transport.

14. Procédé de transfert d'articles parallélépipédiques (2), correctement positionnés, d'un flux d'articles, comme des cartons, des paquets ou analogues, d'une première bande transporteuse (1) sur une deuxième bande transporteuse (3), adjacente dans la région de transfert, ainsi que de rangement ordonné des articles (2) sur un support de charges (18) transportable sur la deuxième bande transporteuse (3), une unité stockable sur le support de charges (18) et constituée d'un ou plusieurs articles (2) orientés parallèlement à la direction de transport (4), en étant éventuellement tournés de 90° par rapport à la direction de transport (4), étant formée dans la région de transfert de la première bande transporteuse (1) après avoir déterminé préalablement la géométrie de chaque article (2) et étant transférée sur le support de charges (18), transversalement à la direction de transport (4) de la bande transporteuse, au moyen d'un élévateur de transfert, ledit procédé comportant les étapes opératoires suivantes :
a. Les articles (2) préalablement triés sont amenés individuellement l'un après l'autre à la région de transfert sur une première bande transporteuse (1).
b. Chaque article (2) est guidé, par une composante de force agissant transversalement à la direction de transport (4), contre la limite latérale de la première bande transporteuse (1) où l'une de ses faces latérales est orientée dans la direction de transport (4).
c. Les dimensions géométriques des articles (2) et leur orientation sur la première bande transporteuse (1) sont déterminées au moyen de capteurs.
d. Une matrice de rangement optimisé est déterminée dans l'ordinateur en exploitant les données géométriques déterminées des articles (2) et en tenant compte de la surface de stockage du support de charges (18).
e. En fonction de la matrice de rangement déterminée, l'article (2) est ajouté dans la région de transfert à une unité stockable constituée d'articles (2) disposés en rangée l'un derrière l'autre de façon serrée.
f. L'unité stockable constituée d'articles (2) disposés en rangée l'un derrière l'autre de façon serrée est transférée sur le support de charges (18) situé sur la deuxième bande transporteuse (3).
g. Éventuellement, au moins une autre rangée d'articles (2), disposés l'un derrière l'autre de façon serrée, est ajoutée en même au transfert de la première rangée dans la région de transfert puis est transférée sur le même support de charges (18).

15. Procédé selon la revendication 14, **caractérisé en ce que**, lors du transfert de la deuxième rangée, et éventuellement d'une autre rangée, d'articles (2) disposés l'un derrière l'autre de façon serrée, cette rangée ou ces rangées sont déplacées conjointement avec la première rangée sur le support de charges (18).

16. Procédé selon les revendications 14 et 15, **caractérisé en ce que** les articles (2), qui ne correspondent pas à la matrice de rangement demandée quant à l'orientation fournie, sont tournés de 90° avant la région de transfert.
